# EUROPÄISCHE PATENTSCHRIFT

(11) **EP 2 562 630 B1**
(45) Veröffentlichungstag und Bekanntmachung des Hinweises auf die Patenterteilung: **17.06.2020**
(21) Anmeldenummer: 12175709.0
(22) Anmeldetag: 10.07.2012
(51) Int. Cl.: G06F 3/0488, B60K 37/06, G06F 3/044

(54) **Bedienvorrichtung**
Operating device
Dispositif de commande

(30) Priorität: 26.08.2011 DE 102011081604
(43) Veröffentlichungstag der Anmeldung: 27.02.2013
(73) Patentinhaber: Bayerische Motoren Werke Aktiengesellschaft, 80809 München (DE)
(72) Erfinder: Lindner, Matthias, 82166 Gräfelfing (DE); Dr.Tille, Thomas, 81249 Muenchen (DE)

(56) Entgegenhaltungen:
- EP-A1- 1 425 352
- WO-A2-2006/045209
- DE-U1-202011 003 166
- US-A1- 2006 052 907
- US-A1- 2006 066 584
- US-A1- 2008 204 417
- US-A1- 2009 223 437
- US-A1- 2011 163 448

## Beschreibung

Die Erfindung betrifft eine Bedienvorrichtung zur Bedienung insbesondere von elektrischen Komponenten eines Fahrzeugs mit einer Betätigungsoberfläche, die eine Sichtseite der Bedienvorrichtung bildet, auf der mindestens ein Symbol darstellbar ist, wobei durch Berühren mindestens eines Bereichs der Betätigungsoberfläche, in dem ein Symbol abgebildet ist, mit einem Betätigungselement ein Signal an mindestens eine dem Symbol zugeordnete elektrische Komponente von der Bedienvorrichtung ausgegeben wird.

Im zeitgenössischen Fahrzeugbau bestehen Bedienoberflächen im Allgemeinen aus Metall, Kunststoff oder Kunststofffolien. Lediglich Zierelemente oder Blenden des Fahrgastinnenraums sind aus höherwertigen Materialien wie Holz, Leder, Keramik, Chrom usw. ausgebildet. Metalloberflächen weisen eine sehr hohe Temperaturkapazität auf und erwärmen sich stark bzw. kühlen sich stark ab, je nach Außentemperatur, was zu einer unangenehmen Bedienung führt. Um dieses Problem zu umgehen, werden im Stand der Technik Kunststoffoberflächen eingesetzt. Diese hinterlassen beim Bediener jedoch keinen hochwertigen Eindruck. Die Verwendung von Kunststofftasten als zusätzliches haptisches Element führt jedoch dazu, dass ein erhöhter Bauraum benötigt wird. Solche Bedienelemente sind z.B. aus der WO 2006/045209 bekannt.

Aus der US 2008/0204417 A1 ist ein multimodales elektronisches Gerät bekannt, welches ein Tastenfeld zur Darstellung einer Vielzahl von Tastenfeldkombinationen umfasst.

Aus der US 2006/0052907 A1 ist eine Steuerungseinrichtung für Fahrzeuge bekannt, mit der hörbare oder fühlbare Rückmeldungen an einen Bediener generierbar sind.

Ausgehend von diesem Stand der Technik macht es sich die vorliegende Erfindung zur Aufgabe, ein vereinfachtes Verfahren anzugeben, mit dem die Nachteile des Standes der Technik überwunden werden. Ferner ist es Aufgabe der Erfindung, eine Bedienvorrichtung anzugeben, die gegenüber Temperaturschwankungen unabhängig ist und gleichzeitig niedrige Bauraumhöhen ermöglicht.

Diese Aufgabe wird durch eine Vorrichtung mit den Merkmalen des unabhängigen Anspruchs gelöst. Die abhängigen Ansprüche stellen vorteilhafte Ausführungsformen der Erfindung dar.

Zur Lösung dieser Aufgabe schlägt die Erfindung eine Bedienvorrichtung zur Bedienung von elektrischen Komponenten, insbesondere von Komponenten eines Fahrzeugs mit einer Betätigungsoberfläche vor, die eine Sichtseite der Bedienvorrichtung bildet, auf der mindestens ein Symbol darstellbar ist, wobei durch Berührung mindestens eines Bereichs der Betätigungsoberfläche, in dem ein Symbol abgebildet ist, mit einem Betätigungselement ein Signal an mindestens eine dem Symbol zugeordnete elektrische Komponente von der Bedienvorrichtung ausgegeben wird. Weiterhin kann die Bedienvorrichtung zumindest ein formgebendes Strukturelement aus Glas, insbesondere aus Saphirglas, umfassen. Dies bietet den Vorteil, dass eine Bedienoberfläche realisiert werden kann mit einer hohen Kratzfestigkeit. Aufgrund der schlechten Wärmeleitfähigkeit des Glasmaterials lässt sich auch ein "cool touch" Effekt erzeugen, ähnlich wie bei der Berührung von Keramikoberflächen.

Darüber hinaus kann die Sichtseite als eine durchgehend unterbrechungsfreie Oberfläche ausgebildet sein. Eine spaltfreie Betätigungsoberfläche aus Glas erzeugt einen äußerst hochwertigen, modernen Gesamteindruck.

In einer bevorzugten Ausführungsform der Erfindung weist das Strukturelement eine Dicke von mindestens 3 mm auf. Dabei ist das Strukturelement bevorzugt als eine Glasplatte ausgebildet. Dies bietet den Vorteil, dass ein hochwertiger "Black Panel" Tiefeneffekt erzielt werden kann, bei dem die Symbolik einen schwebenden Eindruck hinterlässt.

Weiterhin kann die Betätigungsoberfläche zumindest abschnittsweise eine Nanobeschichtung aufweisen. Mit anderen Worten, auf der Sichtseite des Strukturelements ist eine Nanobeschichtung aufgetragen, die eine kratzfeste, entspiegelte Antifingerprint-Beschichtung darstellt. Dadurch kann eine Reduzierung von Fingerabdrücken sowie Reflexionen erzielt werden.

Weiterhin kann auf einer der Sichtseite gegenüberliegenden Oberfläche des Strukturelements eine Lackschicht gelasert sein. Durch Aufbringen dieser Lackschicht kann eine Tiefenwirkung der dargestellten Symbolik als Black Panel, Blue Panel usw. dargestellt werden.

Darüber hinaus kann die Lackschicht mit mindestens einem Symbol bedruckt sein.

Zudem kann auf einer der Sichtseite gegenüberliegenden Oberfläche des Strukturelements mindestens ein Positionssensor, insbesondere ein Berührungssensor, vorgesehen sein, mit dem die Position eines Bedienelements erfassbar ist. Als Berührungssensor eignet sich hierbei insbesondere eine sogenannte Touch-Sensorik auf kapazitiver Basis zur Detektierung der Position eines Bedienelements, beispielsweise eines speziellen Stiftes oder eines menschlichen Fingers. Hieraus ergeben sich Vorteile dahingehend, dass nur bei Berührung der Betätigungsfläche mit dem Bedienelement ein Signal an die elektrische Komponente ausgelöst wird. Bei Ablegen anderer Dinge, wie beispielsweise Handtaschen, Mobiltelefonen und dergleichen auf der Betätigungsoberfläche werden derartige Gegenstände nicht als Bedienelemente erkannt und somit kein Signal ausgesendet. Die Positionssensorik kann dabei beispielsweise direkt auf dem Strukturelement aufgedruckt werden.

Weiterhin kann auf einer der Sichtseite gegenüberliegenden Oberfläche des Strukturelements eine Klebefolie aufgebracht sein. Eine solch transparente Klebefolie bietet einen Splitterschutz im Falle einer Beschädigung der Bedienvorrichtung. Beispielsweise im Crashfall, bei dem das Strukturelement aus Glas bzw. die Glasplatte zersplittert, bleiben die einzelnen Splitter an der Klebefolie haften.

Auf einer der Sichtseite gegenüberliegenden Oberfläche des Strukturelements kann ferner auch eine Schalteinrichtung vorgesehen sein, zur Erfassung einer Berührung der Betätigungsoberfläche mit dem Bedienelement, wobei basierend auf einem Ausgangssignal des Positionssensors und einem Ausgangssignal der Schalteinrichtung das Signal an die elektrische Komponente ausgegeben wird. Mit Hilfe des Positionssensors wird ermittelt, in welchem Bereich der Betätigungsoberfläche ein Bediener ein Bedienungselement positioniert und damit erfasst, welches Symbol der Bediener ansteuern möchte. Die Schalteinrichtung kann dabei als Mikroschalter bzw. Mechanik für haptische Rückmeldung ausgebildet sein und dient der Auslösung des Bedienbefehls. Aus der Kombination der Ausgangssignale des Positionssensors und der Schalteinrichtung wird dann ein Signal an die gewünschte elektrische Komponente des Fahrzeugs ausgegeben. Dies hat den Vorteil, dass ein unabsichtliches Berühren der Betätigungsoberfläche oder ein darüberwischen keine unbeabsichtigten Schaltbefehle auslösen kann.

Darüber hinaus können auf der Betätigungsoberfläche Vertiefungen und/oder Erhöhungen vorgesehen sein, wobei jede Vertiefung und/oder Erhöhung einem Symbol zugeordnet ist. Dies bietet Vorteile dahingehend, dass eine Blindbedienung ermöglicht wird, wobei ein Bediener allein durch seinen Tastsinn eine entsprechende Symbolik erkennen und einen dazugehörigen Bedienbefehl auslösen kann.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang einer beispielhaft beschriebenen Ausführungsform der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:
- Figur 1: den prinzipiellen Aufbau einer erfindungsgemäßen Bedienvorrichtung und
- Figur 2: eine Mittelkonsole für ein Kraftfahrzeug.

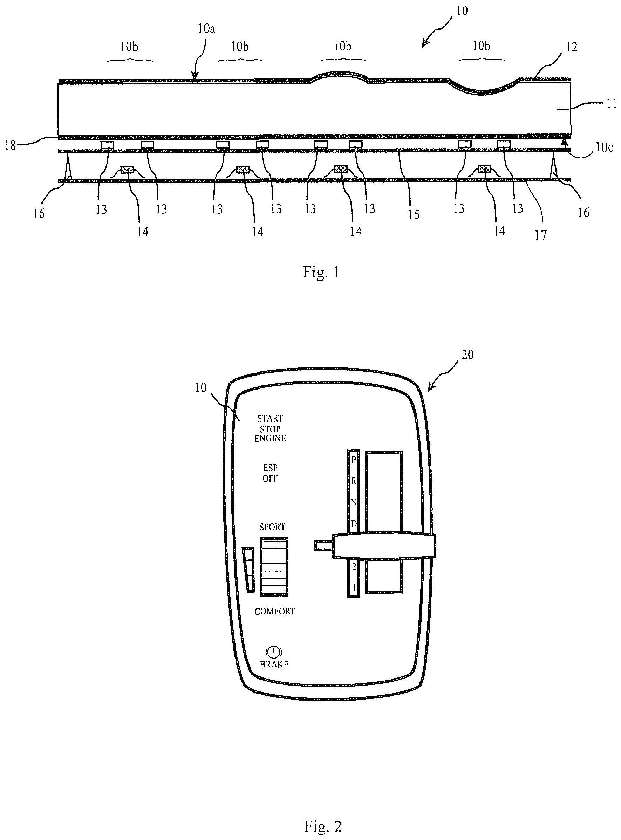

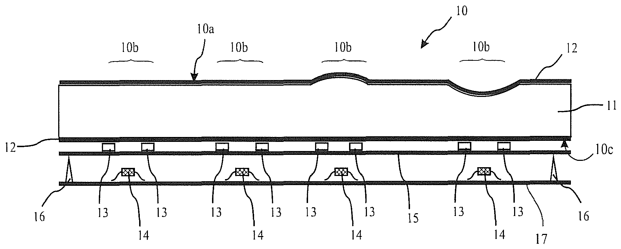

Im Folgenden sollen kurz die Vorteile der vorliegenden Erfindung zusammengefasst werden. Durch Vorsehen einer geschlossenen Betätigungsoberfläche kann ein besonders hochwertiger und moderner Gesamteindruck erzeugt werden. Ferner bietet der Verzicht auf Vertiefungen wie Fugen und Kanten den Vorteil, dass die Betätigungsoberfläche schmutzunempfindlich ist, weil sich beispielsweise weniger Staubablagerung daran anheften können. Durch die Dicke des Strukturelements kann ein hochwertiger "Black Panel" Tiefeneffekt erzeugt werden. Ferner wird durch Verwendung eines Strukturelements aus Glas ein angenehmes Temperaturempfinden im Sinne eines "Cool-Touch" realisiert, das eine ähnliche Berührungshaptik wie Keramik aufweist. Aufgrund der homogenen Betätigungsoberfläche (10a) ist eine variable Anordnung von Anzeige- und Bedienelementen möglich. Durch eingeschliffene und codierte Vertiefungen und/oder Erhöhungen wird eine Blindbedienung der elektrischen Komponenten ermöglicht. Darüber hinaus kann ein sehr flaches Package realisiert werden, was zu einem weiteren Bauraumgewinn führt. Nicht zuletzt ist durch die Zusammenlegung von einzelnen Bedienelementen eine Kosteneinsparung möglich. Im Folgenden soll zunächst der prinzipielle Aufbau der erfindungsgemäßen Bedienvorrichtung anhand von Figur 1 erläutert werden. Die Bedienvorrichtung 10 umfasst als Strukturelement 11 eine Glasplatte, die insbesondere aus kratzunempflindlichen robusten Saphirglas besteht. Auf einer dem Bediener zugewandten Sichtseite ist eine Betätigungsoberfläche 10a vorgesehen. Diese Betätigungsoberfläche 10a kann ganz oder auch nur abschnittsweise mit einer Nanobeschichtung 12 beschichtet sein, um dadurch kratzunempfindlich und fingerabdruckabweisend ausgebildet zu sein.

Auf einer der Betätigungsoberfläche 10a gegenüberliegenden Seite 10c der Glasplatte 11 ist eine Lackschicht 18 mit Hilfe eines Lasers aufgebracht. In der Lackschicht 18 sind eine Mehrzahl von Symbolen angeordnet. Mit Hilfe von Leuchtmitteln 14, wie beispielsweise LED-Leuchten die sich unterhalb der Symbole in der Lackschicht 18 befinden, können diese Symbole durch die Glasplatte 11 hindurch auf der Betätigungsoberfläche 10a abgebildet werden. In Figur 1 sind Bereiche 10b auf der Betätigungsoberfläche 10a dargestellt, in denen die auf der Lackschicht 18 eingebrannten Symbole abgebildet werden. Die Glasplatte 11 ist folglich zumindest teilweise transparent, so dass von den Beleuchtungsmitteln 14 ausgestrahltes Licht an die Betätigungsoberfläche 10a gelangen kann.

Auf der Seite 10c der Glasplatte 11 - in Figur 1 eine Unterseite der Glasplatte 11 - sind Positionssensoren 13 angeordnet, mit denen die Position eines auf der Betätigungsfläche 10a befindlichen Bedienelements erfasst werden kann. Wie bereits oben erwähnt, kann ein solches Bedienelement ein menschlicher Finger oder ein speziell hierfür vorgesehener Stift sein. Wenn folglich ein Bediener einen der vorbestimmten Bereiche 10b der Betätigungsoberfläche 10a mit einem Bedienelement berührt, erfasst ein dem Bereich 10b entsprechender Sensor 13 die exakte Position des Bedienelements. Der entsprechende Positionssensor 13 gibt dabei ein Signal aus. An der Unterseite der Glasplatte 10c ist eine Klebefolie 15 vorgesehen, die wahlweise direkt auf der Glasplatte 11 angebracht werden kann oder auf der Lackschicht 18, die sich auf der Unterseite der Glasplatte 11 befindet. Wie oben erläutert, hat die Klebefolie eine sicherheitsrelevante Funktion im Crashfall.

Die Glasplatte 11 stützt sich über Schalteinrichtungen 16 auf eine Leiterplatte 17 ab. Die Schalteinrichtungen 16 können dabei wahlweise als Mikroschalter oder andere mechanische Schaltelemente ausgebildet sein, die einen Druck auf die Betätigungsoberfläche 10a erfassen können. Wenn also der Bediener ein Bedienelement oberhalb eines Symbols positioniert und die Betätigungsoberfläche 10a berührt und zusätzlich einen vorbestimmten Druck ausübt, wird dies mechanisch in den Schalteinrichtungen erfasst, wobei diese daraufhin ein Signal ausgeben.

Um eine Blindbetätigung zu ermöglichen, sind auf der Betätigungsoberfläche 10a Erhebungen und Vertiefungen dargestellt. Durch eine spezielle Codierung der Vertiefung oder Erhebung, beispielsweise mit einem Muster wie einem Raster, kann eine Blindbetätigung realisiert werden.

Im Folgenden soll das Zustandekommen eines Bedienbefehls erläutert werden. Wie eingangs erwähnt, wird mit Hilfe der Positionssensoren 13 detektiert, an welcher Stelle der Betätigungsoberfläche 10a sich ein Betätigungselement befindet. Wenn also ein Bediener lediglich seine Finger auf ein Symbol legt, das auf der Betätigungsoberfläche 10a abgebildet ist, wird noch kein Bedienbefehl erkannt. Erst wenn der Bediener einen vorbestimmten Druck auf diesen Bereich 10b ausübt, wird dies von der Schalteinrichtung 16 erfasst. Aus dem Signal, das von dem jeweiligen Positionssensor und dem Signal das von der Schalteinrichtung ausgegeben wird, wird in einer Steuereinheit, welche die beiden Signale empfängt, ein Bedienwunsch des Bedieners erfasst. Danach wird der Bedienbefehl ermittelt und ein Signal an eine dem Bedienwunsch des Bedieners entsprechende elektrische Komponente eines Fahrzeugs ausgegeben.

In Figur 2 ist beispielhaft eine Draufsicht auf eine Mittelkonsole 20 für ein Kraftfahrzeug gezeigt, die eine oben beschriebene Bedienvorrichtung 10 umfasst, mit der verschiedene Komponenten eines Fahrzeugs bedient werden können. Beispielsweise kann ein Elektro- oder Verbrennungsmotor ein- und ausgeschalten werden, Fahrassistenzsysteme ein- und ausgeschalten werden, wie beispielsweise ESP, ABS, spezielle Fahrwerksabstimmungen eingestellt, die Klimaanlage bedient werden. Darüber hinaus kann auch die Handbremse des Fahrzeugs über die Bedienvorrichtung aktiviert oder deaktiviert werden, die elektrischen Fensterheber, ein Schiebedach und/oder ein Cabriolet-Verdeck betätigt werden. Selbstverständlich eignet sich die Bedienvorrichtung 10 auch nur zur Anzeige von Symbolen, die keine Betätigungsfunktion aufweisen, wie beispielsweise eine Ganganzeige eines Automatikgetriebes.

## Patentansprüche

1. Bedienvorrichtung (10) zur Bedienung von elektrischen Komponenten eines Fahrzeugs, mit einer Betätigungsoberfläche (10a), die eine Sichtseite der Bedienvorrichtung (10) bildet, auf der mindestens ein Symbol darstellbar ist, wobei durch Berührung mindestens eines Bereichs (10b) der Betätigungsoberfläche (10a) mit einem Betätigungselement, ein Signal von der Bedienvorrichtung (10) an mindestens eine dem Symbol zugeordnete elektrische Komponente ausgegeben wird,
wobei
die Bedienvorrichtung (10) zumindest ein formgebendes Strukturelement (11) aus Saphirglas, umfasst,
das Strukturelement (11) eine Dicke von mindestens 3 mm aufweist, auf einer der Sichtseite gegenüberliegenden Oberfläche (10c) des Strukturelements (11) eine Lackschicht (18) gelasert ist, wobei die Lackschicht (18) mit dem mindestens einem Symbol bedruckt ist.

2. Vorrichtung nach Anspruch 1, wobei
die Sichtseite (10a) als eine durchgehend unterbrechungsfreie Oberfläche ausgebildet ist.

3. Vorrichtung nach einem der vorhergehenden Ansprüche, wobei
die Betätigungsoberfläche (10a) zumindest abschnittsweise eine Nanobeschichtung (12) aufweist.

4. Vorrichtung nach einem der vorhergehenden Ansprüche, wobei auf einer der Sichtseite gegenüberliegenden Oberfläche (10c) des Strukturelements (11) mindestens ein Positionssensor (13) vorgesehen ist, zur Erfassung der Position eines Bedienelements auf der Betätigungsoberfläche (10a).

5. Vorrichtung nach einem der vorhergehenden Ansprüche, wobei
auf einer der Sichtseite gegenüberliegenden Oberfläche (10c) des Strukturelements (11) eine Klebefolie (15) aufgebracht ist.

6. Vorrichtung nach Anspruch 4, wobei
auf einer der Sichtseite gegenüberliegenden Oberfläche des Strukturelements (11) eine Schalteinrichtung (16) vorgesehen ist, zur Erfassung einer Berührung der Betätigungsoberfläche (10a) mit dem Bedienelement, wobei basierend auf einem Ausgangssignal des Positionssensors (13) und einem Ausgangssignal der Schalteinrichtung (16) das Signal an die elektrische Komponente ausgegeben wird.

7. Vorrichtung nach einem der vorhergehenden Ansprüche, wobei
auf der Betätigungsoberfläche (10a) Vertiefungen und/oder Erhöhungen vorgesehen sind, wobei jede Vertiefung und/oder Erhöhung dem mindestens einem Symbol zugeordnet ist.

## Claims

1. An operating device (10) for operating electrical components of a vehicle, with an actuation surface (10a) which forms a visible face of the operating device (10), on which surface at least one symbol can be represented, wherein by contacting at least one region (10b) of the actuation surface (10a) with an actuating element a signal is transmitted from the operating device (10) to at least one electrical component associated with the symbol, wherein
the operating device (10) comprises at least one shaping structural element (11) made of sapphire glass,
the structural element (11) has a thickness of at least 3 mm, a paint layer (18) is lasered on a surface (10c) of the structural element (11) which is located opposite the visible face, wherein the paint layer (18) is printed with the at least one symbol.

2. A device according to Claim 1, wherein
the visible face (10a) is formed as a continuously interruption-free surface.

3. A device according to one of the preceding claims, wherein
the actuation surface (10a), at least in portions, has a nano-coating (12).

4. A device according to one of the preceding claims, wherein
at least one position sensor (13) is provided on a surface (10c) of the structural element (11) which is located opposite the visible face, for detecting the position of an operating element on the actuation surface (10a).

5. A device according to one of the preceding claims, wherein
an adhesive film (15) is applied to a surface (10c) of the structural element (11) which is located opposite the visible face.

6. A device according to Claim 4, wherein
a switching means (16) is provided on a surface of the structural element (11) which is located opposite the visible face, for detecting contact of the actuation surface (10a) with the operating element, wherein the signal is transmitted to the electrical component based on an output signal of the position sensor (13) and an output signal of the switching means (16).

7. A device according to one of the preceding claims, wherein
indentations and/or elevations are provided on the actuation surface (10a), with each indentation and/or elevation being associated with the at least one symbol.

## Revendications

1. Dispositif de commande (10) pour permettre de faire fonctionner des composants électriques d'un véhicule comprenant une surface d'actionnement (10a) formant une face visible du dispositif de commande (10) sur laquelle peut être représenté au moins un symbole, un contact d'au moins une zone (10b) de la surface d'actionnement (10a) avec un élément d'actionnement permettant au dispositif de commande (10) de délivrer un signal à au moins un composant électrique associé au symbole,
dans lequel
le dispositif de commande (10) comprend au moins un élément de structure (11) de conformation en verre saphir,
l'élément de structure (11) a une épaisseur d'au moins 3 mm,
sur la surface (10c) de l'élément de structure (11) opposée à la face visible, une couche de vernis (18) est appliquée au laser, le symbole étant imprimé sur la couche de vernis (18).

2. Dispositif conforme à la revendication 1,
dans lequel la face visible (10a) est réalisée sous la forme d'une surface continue sans interruption.

3. Dispositif conforme à l'une des revendications précédentes,
dans lequel la surface d'actionnement (10a) comporte au moins par segments un revêtement nano moléculaire (12).

4. Procédé conforme à l'une des revendications précédentes,
dans lequel il est prévu sur la surface (10c) de l'élément de structure (11) opposée à la face visible, au moins un capteur de position (13) permettant de détecter la position d'un élément de commande sur la surface d'actionnement (10a).

5. Dispositif conforme à l'une des revendications précédentes,
dans lequel un film de colle (15) est appliqué sur la surface (10c) de l'élément de structure (11) opposée à la face visible.

6. Dispositif conforme à la revendication 4,
dans lequel il est prévu sur la surface de l'élément de structure (11) opposée à la face visible un dispositif de commutation (16) permettant de détecter un contact de la surface d'actionnement (10a) avec l'élément de commande, le signal étant délivré au composant électrique sur le fondement d'un signal de sortie du capteur de position (13) et d'un signal de sortie du dispositif de commutation (16).

7. Dispositif conforme à l'une des revendications précédentes,
dans lequel il est prévu sur la surface d'actionnement (10a) des renfoncements et/ou des bossages, chaque renfoncement et/ou bossage étant associé à au moins un symbole.
